# EUROPEAN PATENT APPLICATION

(11) **EP 4 459 511 A1**
(43) Date of publication of application: **06.11.2024**
(21) Application number: 24172491.3
(22) Date of filing: 25.04.2024
(51) Int. Cl.: G06N 3/10, G06N 20/00, G06F 40/58, G06N 3/0455, G06N 3/0475

(54) **REDUCED DATA MACHINE LEARNING CUSTOMIZATION AND OUTCOME REFINEMENT**

(30) Priority: 28.04.2023 US 202363462803 P
(71) Applicant: Fossick LLC, Carmel IN 46032 (US)
(72) Inventor: BURKE, Anthony Jon, Noblesville, IN, 46062 (US); GOENS, Jeffrey, Carmel, IN, 46033 (US)
(74) Representative: Bardehle Pagenberg Partnerschaft mbB Patentanwälte Rechtsanwälte

(57) **Abstract**

The output of a machine learning model may be customized for a particular application using context satisfying the requirements of that application. This may be done using a method comprising receiving an artificial intelligence request, retrieving a set of exemplars corresponding to the artificial intelligence request, generating an artificial intelligence prompt comprising the exemplars and a payload of the artificial intelligence request, and obtaining an artificial intelligence response by providing the artificial intelligence prompt to a trained machine learning model.

## Description

### FIELD

The disclosed technology pertains to the field of machine learning, particularly to the customization of machine learning models and the refinement of their outputs in specific applications.

### BACKGROUND

Machine learning models, such as deep learning models, neural networks and large language models, have tremendous potential to automate and/or improve processes in a wide variety of areas, such as natural language processing, computer vision, cybersecurity and others. However, although these types of models have demonstrated their potential, the need for large quantities of high quality data can be an obstacle to their deployment. This is especially the case when a model is being deployed for a specific application which requires specific outputs different with requirements that may not be applicable outside of that context. Accordingly, there is a need for improvements in technology for applying machine learning models to be applied to specific applications in a manner which allows for the requirements of those applications to be met.

### BRIEF DESCRIPTION OF THE DRAWINGS

It is believed the disclosed technology may be understood in light of the following description of certain examples taken in conjunction with the accompanying drawings, in which like reference numerals identify the same elements and in which:
FIG. 1 illustrates a method in which context information may be used to obtain output focused on a particular application.
FIG. 2 illustrates steps which may be performed following steps of a method such as illustrated in FIG. 1.
FIG. 3 illustrates how a system implemented based on this disclosure could be integrated into a particular workflow.
FIG. 4 is a block diagram depicting a computing resource used in various embodiments.

The drawings are not intended to be limiting in any way, and it is contemplated that various embodiments of the invention may be carried out in a variety of other ways, including those not necessarily depicted in the drawings. The accompanying drawings incorporated in and forming a part of the specification illustrate several aspects of the present invention, and together with the description serve to explain the principles of the invention; it being understood, however, that this invention is not limited to the precise arrangements shown.

### DETAILED DESCRIPTION

The following description of certain examples of the invention should not be used to limit the scope of protection provided by this document or any related document. Other examples, features, aspects, embodiments, and advantages of the disclosed technology will become apparent to those skilled in the art from the following description, which is by way of illustration, one of the best modes contemplated for practicing the disclosed technology. As will be realized, the disclosed technology is capable of other different and obvious aspects, all without departing from the scope of what could be implemented by one of ordinary skill in the art without undue experimentation based on this disclosure or of what this disclosure would convey to one of ordinary skill in the art has been invented. Accordingly, the drawings and descriptions should be regarded as illustrative in nature and not restrictive.

It will be appreciated that any one or more of the teachings, expressions, versions, examples, etc. described herein may be combined with any one or more of the other teachings, expressions, versions, examples, etc. that are described herein. The following-described teachings, expressions, versions, examples, etc. should therefore not be viewed in isolation relative to each other. Various suitable ways in which the teachings herein may be combined will be readily apparent to those of ordinary skill in the art in view of the teachings herein.

### I. Example Application: Document Translation

Some implementations of the disclosed technology may be used to apply models to applications with specific requirements after being trained on non-application specific data. To illustrate, consider the example of natural language translation. Trained machine learning models, such as large language models, may be used in a wide variety of applications, and particular requirements such as tone, reading level, and/or precision may vary from one application to another. Some embodiments of the disclosed technology may be used to apply a machine learning model which is trained on a non-application specific dataset, such as the Wikipedia links dataset (available at
https://code.google.com/archive/p/wiki-links/download or the Amazon reviews dataset available at https://snap.stanford.edu/data/web-Amazon.html, to be applied to specific applications, such as the translation of insurance documents. This may simplify model training by allowing existing open datasets to be used, as well as allow advances in machine learning models made by third parties to be leveraged without requiring those third parties to give up control of (or requiring those third parties to allow retraining of) their models. To illustrate how this may take place, this disclosure discusses the example of translating insurance documents using an external general purpose large language model (e.g., ChatGPT, provided by OpenAI L.L.C. at https://openai.com). However, it should be understood that this example is intended to be illustrative only, and that other implementations and applications of the disclosed technology are also possible and will be immediately apparent to those of skill in the art in light of this disclosure. Accordingly, the discussion herein of how the disclosed technology may be applied in the context of insurance document translation should not be treated as implying limitations on the protection provided by this document or any related document.

### II. Customizing Artificial Intelligence Output Using Context

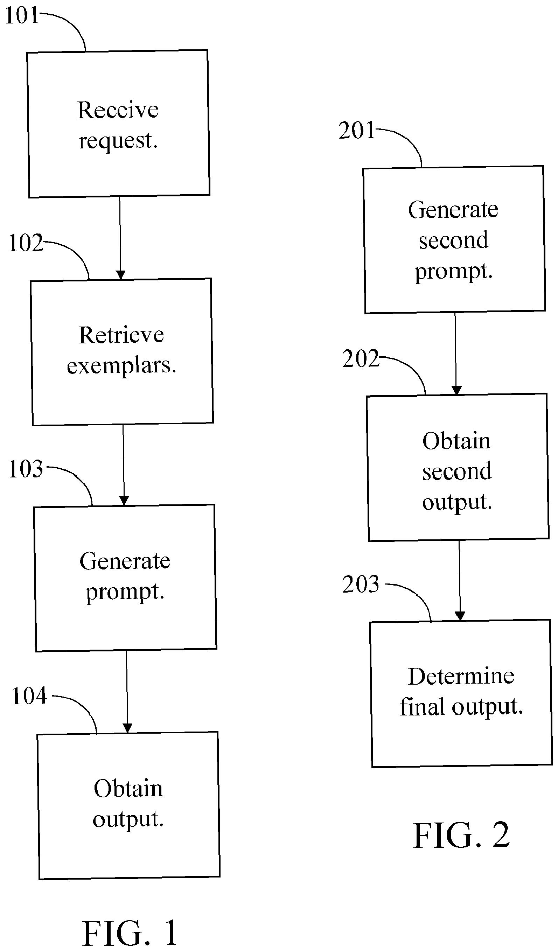

Turning to the figures, FIG. 1 illustrates a method in which context information may be used to obtain output focused on a particular application from a machine learning model trained on non-application specific data. As shown in FIG. 1, such a method may begin with receiving (101) an artificial intelligence request. To illustrate, where the disclosed technology is used for natural language translation, receiving (101) the request may be performed by receiving a document to be translated. Additionally, in some cases, an artificial intelligence request may include other information, such indications of a reading level (e.g., a Flesch reading ease, a Flesch-Kincaid grade level, etc.) at which a translation should be written, or other types of target parameters which could be used to specify the desired output.

After the request is received, a set of exemplars corresponding to that request may be retrieved (102) from a context database. These exemplars may be illustrations of outputs matching the requirements of the particular application where the disclosed technology was being used. To continue the example of natural language translation, if an artificial intelligence request was a request to translate a text payload from a first language to a second, the exemplars corresponding to the request may be document pairs, each pair including a document in the first language and a previously created translation of that document into the second language. To retrieve these documents, a database query may be generated reflecting the substance of the initial artificial intelligence request, and this query may be used to retrieve exemplars based on the substance of those exemplars being similar to the substance of the artificial intelligence request. For example, in natural language translation, a query may be created which includes embeddings of words from the request payload (e.g., as generated using the Word2vec algorithm), and these embeddings may be compared (e.g., using a cosine similarity measure, using a measure of Pythagorean distance in embedding space, etc.) with embeddings created for the documents in the language of the payload which are stored in the context database. The most similar exemplars may then be provided as a query result, and be treated as the exemplars corresponding to the artificial intelligence request. Retrieving (102) the exemplars may also include some additional activities. For example, in a case where the artificial intelligence request includes one or more target parameters, there may be a step of filtering the exemplars to match the specified parameters, and to facilitate this the context database may include, for each exemplar, values for each target parameter, so that the retrieval could be performed using these stored values, thereby accelerating performance of the method by avoiding the target parameter values having to be determined in real time. Other variations (e.g., retrieving exemplars from different context databases based on the application associated with the artificial intelligence request) are also possible, and will be immediately apparent to those of ordinary skill in the art in light of this disclosure. Accordingly, the above description of retrieving (102) exemplars should be understood as being illustrative only, and should not be treated as limiting.

Once the exemplars have been retrieved (102) from the context database, they may be used to generate (103) an artificial intelligence prompt. This prompt may be an input that would be provided to a trained machine learning model to cause that model to provide an output suited to the application associated with the machine learning request. For example, in the case of natural language translation, the prompt could be a reproduction of the exemplars in the form of [first language document 1] : [second language document 1], [first language document 2] : [second language document 2], ... [first language document n], [second language document n], followed by the first language payload from the artificial intelligence request. This prompt could then be used to obtain (104) an artificial intelligence output by providing the prompt to a trained machine learning model. To continue the preceding example, the machine learning model (e.g., a large language model, such as a generative transformer) may be trained to complete the pattern established in the prompt by providing a translation of the payload from the machine learning request where the relationship of the translation to the payload was modeled to match the relationships between documents in the pairs of documents which preceded it in the prompt. In this way, a method such as shown in FIG. 1 could produce an artificial intelligence output (e.g., a translation) which matches the requirements of a specific application by using the exemplars from the context database to establish an input-output relationship to be emulated without requiring the machine learning model to be trained for the application in question.

While the method of FIG. 1 may be used to obtain output focused on a particular application, in some cases such a method may be extended to further tune the output to be provided. An example of such an extension is shown in FIG. 2, which illustrates steps which may be performed after a first artificial intelligence output is obtained (104) in a method such as shown in FIG. 1. As shown in FIG. 2, these steps may include generating (201) a second artificial intelligence prompt. This prompt may be used to get, essentially, a second opinion on the first artificial intelligence output obtained (104) at the conclusion of the method of FIG. 1. Thus, in the context of machine translation, the second artificial intelligence prompt may be a prompt which includes the text to be translated from the original artificial intelligence request, as well as the first artificial intelligence output, so that the second prompt could be used to both create a new translation as well as to evaluate the translation which was previously obtained (104).

Once the second artificial intelligence prompt has been generated (201), it could be used to obtain (202) a second artificial intelligence output by performing acts comprising providing the second artificial intelligence prompt to a second machine learning model, which may be the same machine learning model from which the first artificial intelligence output had previously been obtained (104), or may be a different machine learning model. Additionally, the second artificial intelligence prompt may include a request for the second machine learning model to generate confidence scores for both the second artificial intelligence output and the first artificial intelligence output previously obtained (104) in performing the steps shown in FIG. 1. To illustrate using the example of machine translation, the second artificial intelligence output may comprise (and the second artificial intelligence prompt may request that the second machine learning model generate the second artificial intelligence output to include) first and second confidences which are confidences that text in, respectively, the first and second artificial intelligence outputs, accurately translate the payload from the original artificial intelligence request.

Finally, once the second artificial output has been obtained (202), that output, along with the first artificial intelligence output, may be used to determine (203) a final artificial intelligence output. This may be done by, for example, considering confidences for the first and second artificial intelligence outputs, and determining (203) that the final artificial intelligence output should be whichever of the first and second outputs had the highest confidence. Of course, other approaches may also be used in making this determination. For example, in some cases, the first artificial intelligence output may be treated as a default. In embodiments which use this type of approach, the second artificial intelligence output may only be treated as the final artificial intelligence output if its confidence exceeded the confidence of the first output by at least a threshold amount.

It is also possible that determining (203) the final artificial intelligence output may be performed by generating an output which is not the same as either the first or second artificial intelligence output. For example, in some cases the final artificial intelligence output may be determined (203) as a combination of the first and second outputs. To illustrate in the context of machine translation, consider an embodiment in which translations from the first and second artificial intelligence outputs include confidences (e.g., confidences generated by default, or confidences generated based on triggers such as a low confidence for a translation overall) for portions (e.g., confidences for paragraphs, confidences for sentences, etc.) of their translations. In this type of embodiment, the final artificial intelligence output may be determined by taking the highest confidence sections from each of the first and second outputs, and combining them into a single text which would be provided as a payload for the final artificial intelligence output.

Other aspects of how embodiments implemented based on this disclosure may operate are also possible, even in the context of machine translation. For example, in some cases, determining (203) the final artificial intelligence output may be performed by generating an output that includes only a final translated text (e.g., the translated text from the first artificial intelligence output, or the translated text from the second artificial intelligence output). However, the final artificial intelligence output may be determined (203) by generating an output that also includes one or more confidence scores for the text (or for portions thereof). Similarly, in some cases, a final artificial intelligence output determined (203) in the machine translation context may include more than one translation, such as alternative texts, or may include alternative translations for one or more portions of a text. As another example, while a confidence for a translation included in a first artificial intelligence output may be included in a second artificial intelligence output, it is also possible that a confidence score may be included as part of the first artificial intelligence output itself. In embodiments following this type of approach, whether to perform additional steps such as those shown in FIG. 2 may be conditioned on the confidence in the first artificial intelligence output, with steps such as those shown in FIG. 2 only being performed if the initial confidence was lower than some threshold value.

Alternatives are also possible in the form of additional acts which may be performed by a system implemented based on this disclosure. For example, in some cases, an artificial intelligence output may be reviewed by a human being (either based on a trigger, such as a low confidence, or as a standard procedure), and if the human made any changes to, or replaced, that output, the output as modified or replace by the human may be used to update the context database by adding a new exemplar comprising the human's modified or replacement output as well as the payload from the original artificial intelligence request. Other variations are also possible, and will be immediately apparent to one of skill in the art in light of this disclosure, accordingly, the descriptions of how the acts depicted in FIGS. 1 and 2 could be performed, as well as the methods of FIGS. 1 and 2 themselves, should be understood as being illustrative only, and should not be treated as limiting.

### III. Concrete Use Case Integration

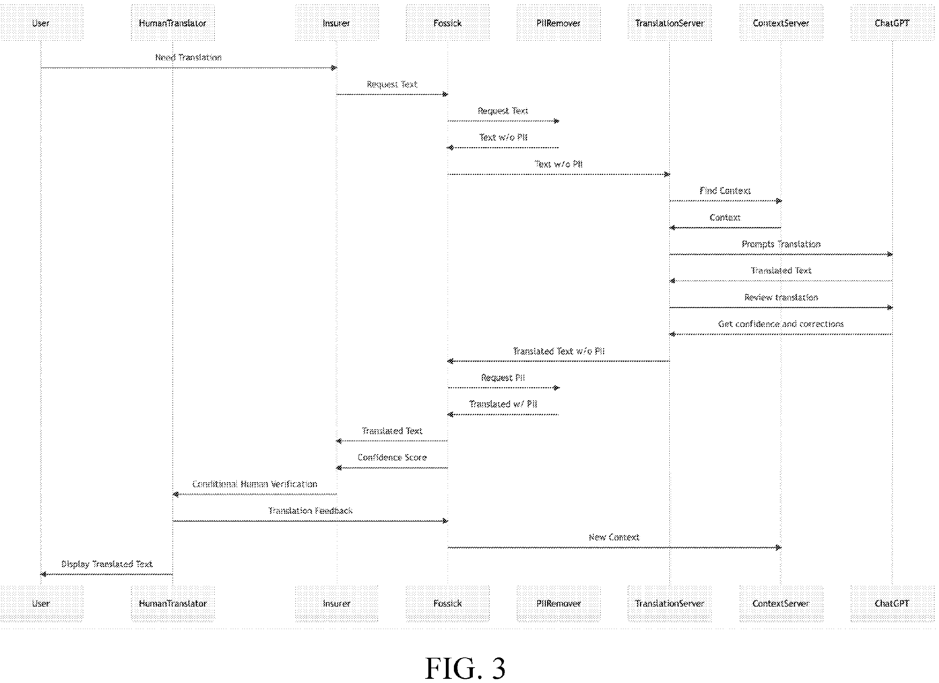

To illustrate how embodiments of the disclosed technology may be implemented in practice, FIG. 3 illustrates how a system implemented based on this disclosure could be integrated into a workflow for translating insurance documents. As shown in FIG. 3, such a translation workflow may begin with a user submitting a request indicating a need for translation. This may be done, for example, by accessing a document submission interface by scanning a QR code (e.g., a QR code included on a document) or visiting the interface at a kiosk, on a website or in a mobile application provided by an insurer, using the interface to upload a document to be translated to the insurer's server and indicating the language into which the document should be translated. Other approaches are also possible. For example, at the conclusion of (or at another point during) a phone call with an insurer's representative (e.g., a customer support representative), a user could request that a transcript or recording of the call be submitted for translation. Similarly, at the conclusion of (or at another point during) a different type of interaction, such as a chat session with a chatbot via a website or mobile app, a user may be able to request that a record of the transaction be submitted for translation, rather than having to convert the interaction into a separate text document and then submitting that document through a dedicated interface as described above. Other approaches to submitting a translation request are also possible, and could be integrated into a workflow such as shown in FIG. 3 by those of ordinary skill in the art without undue experimentation based on this disclosure.

However the submission takes place, after the request is submitted to the insurer, it would be sent from the insurer to an entity operating a system implemented based on this disclosure (labeled in FIG. 3 and referred to in this description as "Fossick"), such as by forwarding the document (which, in this context, should be understood broadly as including both text documents as well as other types of materials to be translated, such as audio recordings, and transcripts of chat sessions or other interactions) to be translated, as well as any other relevant information (e.g., target language, target reading level, etc.) that had not already been established as a default preference that could be applied to the translation task. Fossick may then perform some pre-processing on the document. For example, Fossick may send the document to a separate HIPAA compliant server which would identify (e.g., using regular expression matching) personally identifiable information (PII) in the document and replace it with placeholders. After the pre-processing was complete, Fossick may send the pre-processed document, along with any necessary parameter values (e.g., translation language, target reading level, etc.) to a translation server, which would retrieve exemplars from a context database on a context server, and then use those exemplars to generate a prompt that it would send to a separate sever running an instance of ChatGPT (e.g., a server operated by OpenAI L.L.C. and accessed through an API exposed by that server).

Once the ChatGPT server had provided a translated text, the translation server could request that the ChatGPT server provide a revised text, such as by generating (201) a second artificial intelligence prompt as described previously in the context of FIG. 2. Once the ChatGPT server had provided corrections for the translation as well as a confidence value for the corrected document, those items could be sent back to Fossick, which could perform certain post-processing activities to prepare a final deliverable for the insurer. For example, Fossick could request that the server that had replaced PII in the original document to provide information on the PII that had been replaced, and Fossick could reinsert that PII into the translated document by substituting it in for the placeholder(s) as appropriate. The post-processed translated text and the confidence score could then be provided to the insurer, who may, depending on the confidence score, submit the translation to a human translator for verification. If this verification resulted in changes being made to the translation, then these changes could be used to update the context database (e.g., by adding a new exemplar, as described previously).

Once any necessary human changes had been made, the translated text, either with human changes or in the form provided by Fossick in the event that no human changes were made, could then be provided to the user as a response to the original translation request which initiated the workflow. Additionally, in some cases when a translated text is modified or reviewed by a human before submission as a response to the original request, the translated text may be provided along with a certification of the translation included as part of the response. This may be done in a variety of manners. For example, in a case where a request is made via uploading a document through a submission interface on a website, the response could be provided through providing a download link on the same website. Alternatively, a user may simply be provided with a notification that the request had been processed, with the response itself being made available using a shared repository or other information transfer tool. Similarly, in some embodiments a response may be provided in an accessible manner, such as through a braille kiosk, or another type of braille interface for users who may have some visual impairment. Variations on these approaches (e.g., a combination in which a response is made available via a download link on a website as well as through a shared repository) are also possible, and will be immediately apparent to those of skill in the art based on this disclosure. Accordingly, this description of how a response can be provided, as well as the other aspects of the discussion of FIG. 3, should be understood as being illustrative only, and should not be treated as limiting.

While FIG. 3 and the associated discussion provided a concrete illustration of how aspects of the disclosed technology may be applied in practice, it should be understood that variations are possible even in the context of that concrete illustration. To illustrate, consider the pre- and post-processing which may be performed before and after translation. While the above discussion described how this may include removal and reinsertion of PII, it may also, or alternatively, include other acts such as disassembly and reassembly of structured documents. For instance, if a document to be translated was provided in a form which included various non-text structural elements, such as boxes, captions and/or dividers, pre-processing may include extracting the document's text and sending the text associated with each structural element to the translation server to be translated as a separate document, and post-processing may include combining the translated portions of the text into a single output with the same structure as the original document prior to translation. Additionally, in some cases pre-and post-processing may not be symmetric. For example, in a case where the response to a request is to be in a different format than the request itself (e.g., a request may be made including a text document to be translated, and the response includes an audio representation of a translated version of that document) post-processing may include translating an output provided by the machine learning model (e.g., the ChatGPT server shown in FIG. 3) into the appropriate response format. As another example of a potential variation on the workflow of FIG. 3, in some cases pre-processing may be performed in whole or in part before a document was provided to Fossick (e.g., an insurer may replace PII with placeholders before sending it to Fossick) rather than being performed by Fossick as described.

Of course, variations are also possible in aspects other than the implementation of pre- and post-processing. For instance, while a workflow such as shown in FIG. 3 may be used for translating a document from one language to another, this is not the only way such a workflow may be applied. For example, in some cases, a request may be submitted with a document drafted at one reading level, and the response may be a document which captures the substance of the request payload but is written at a different reading level. Similarly, in some cases, a request may be to create an output that has an entirely different form from the payload of the request, such as by transcribing an audio file included in a request into a text document, creating a video or other visual representation of a document included in a request, or other types of transformations which may be applicable in a given situation. Additionally, in some cases, the workflow itself may be modified, such as by repeating the refinement steps (e.g., the steps of creating new artificial intelligence outputs using procedures such as shown in FIG. 2) one or more times (e.g., continuing to refine as long as the confidence scores in the refined output continue to increase) rather than only performing them once as shown in FIG. 3. Another example of a type of workflow modification which may be performed in some cases would be to use a human review to create new confidence ratings for artificial intelligence outputs generated by machine learning models, rather than simply creating new translations or other outputs. In this case, the new ratings may be applied by adding the new ratings to the context database and used to select appropriate exemplars in response to future requests, and/or may be used to train the machine learning model to improve its ability to generate accurate confidence values for its own outputs.

Variations are also possible in the order in which steps of a workflow such as shown in FIG. 3 may be performed. To illustrate, consider an example where an embodiment is used to provide translation of an interaction (e.g., an audio interaction of an online chat session) during the interaction itself. In such a case, if a portion of the translation had a low confidence score, this portion may be submitted for human review after the interaction was complete, and a corrected translation may be subsequently provided if deemed necessary by the human reviewer. In such an implementation, it is also possible that, if a translation provided in real time had a low confidence score, the user may be made aware of that low confidence score, and of the fact that a human review (with concomitant creation of a revised translation) would take place after the interaction was complete. Other variations (e.g., variations as described in the context of FIGS. 1 and 2) are also possible and will be immediately apparent to one of skill in the art in light of this disclosure. Accordingly, FIG. 3 and its associated description, like FIGS. 1 and 2 and the description associated with those figures, should be understood as being illustrative only, and should not be treated as limiting.

### IV. Exemplary Code

To further illustrate how the disclosed technology may be implemented in practice, table(s) 1-2, below provides exemplary code written in the Python programming language which may be used in a workflow such as shown in FIG. 3

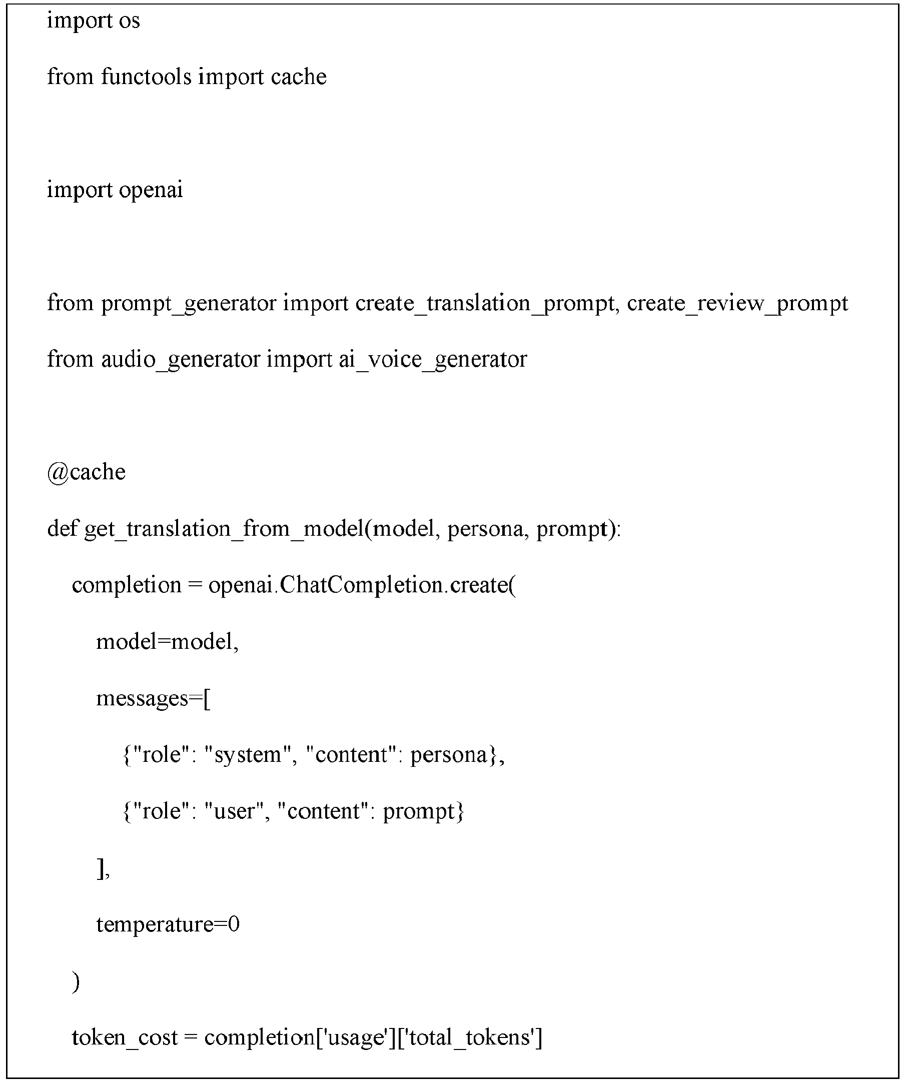

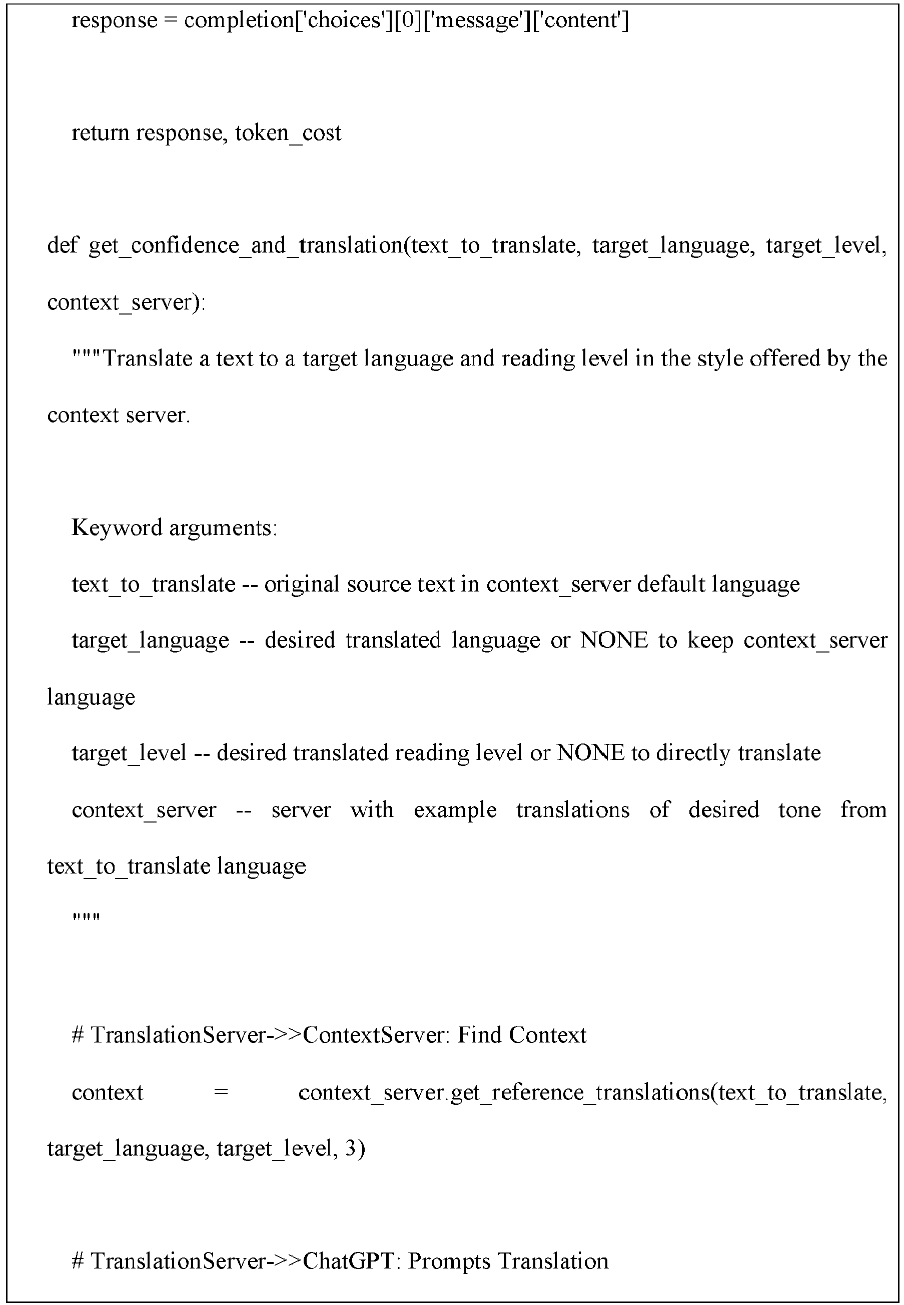

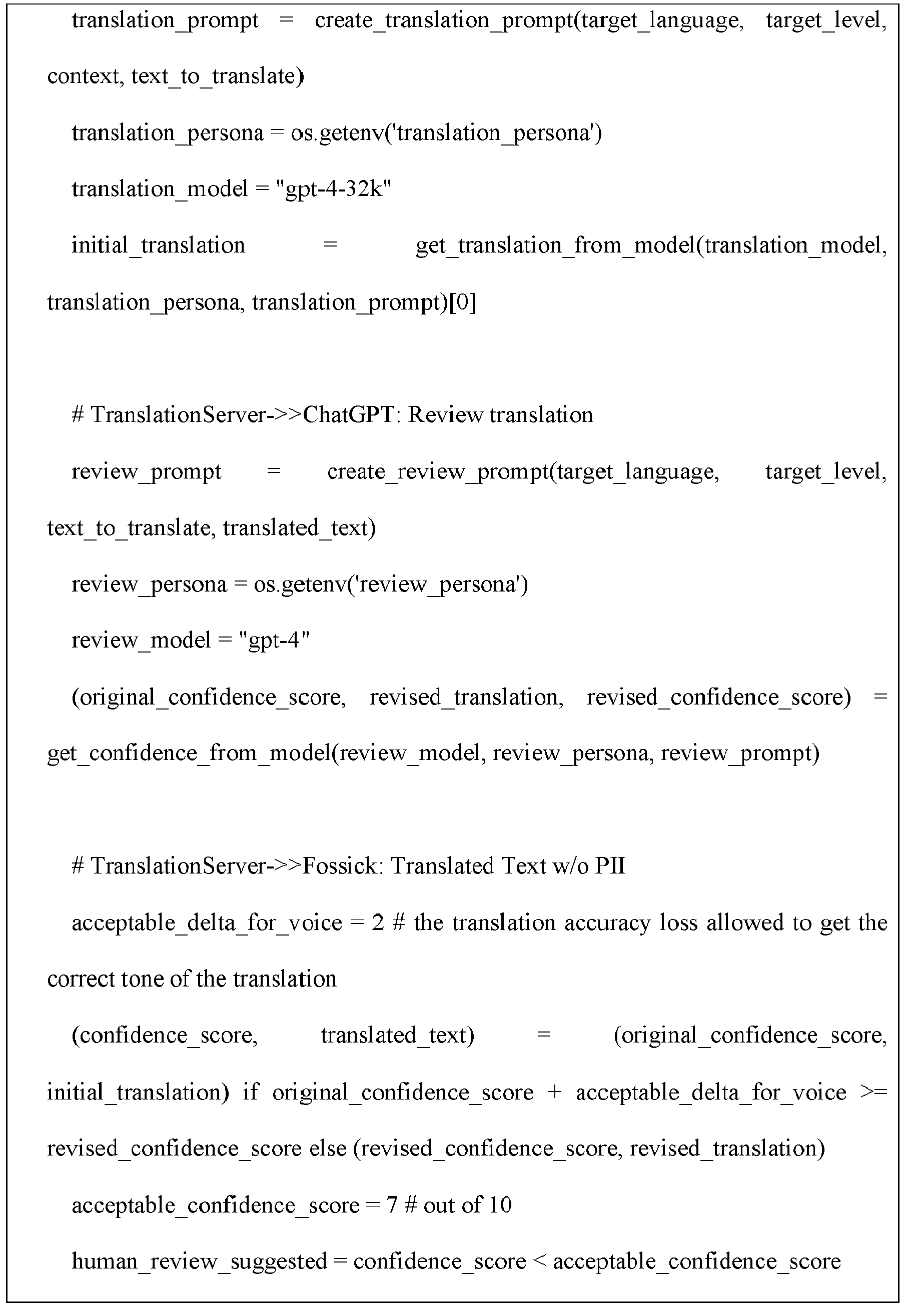

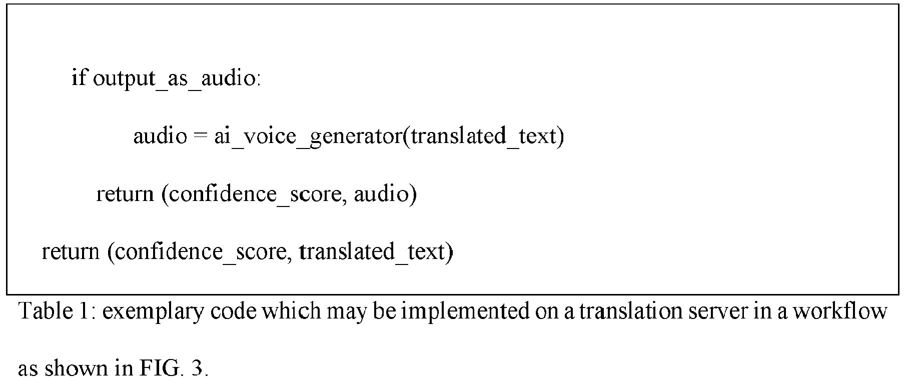

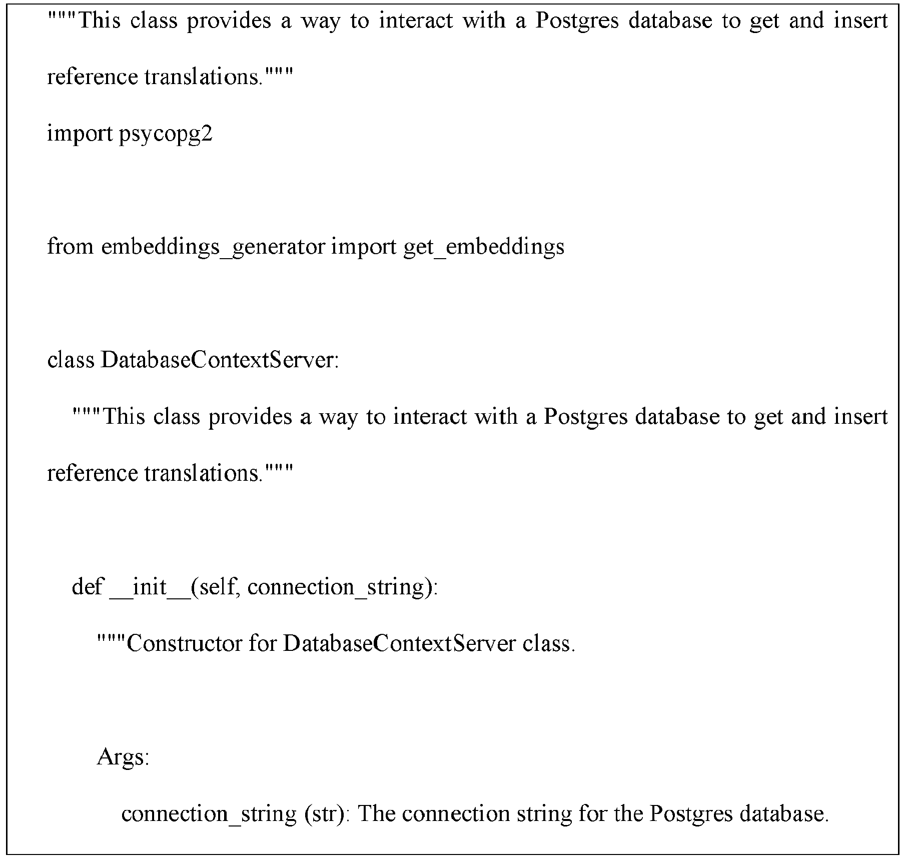

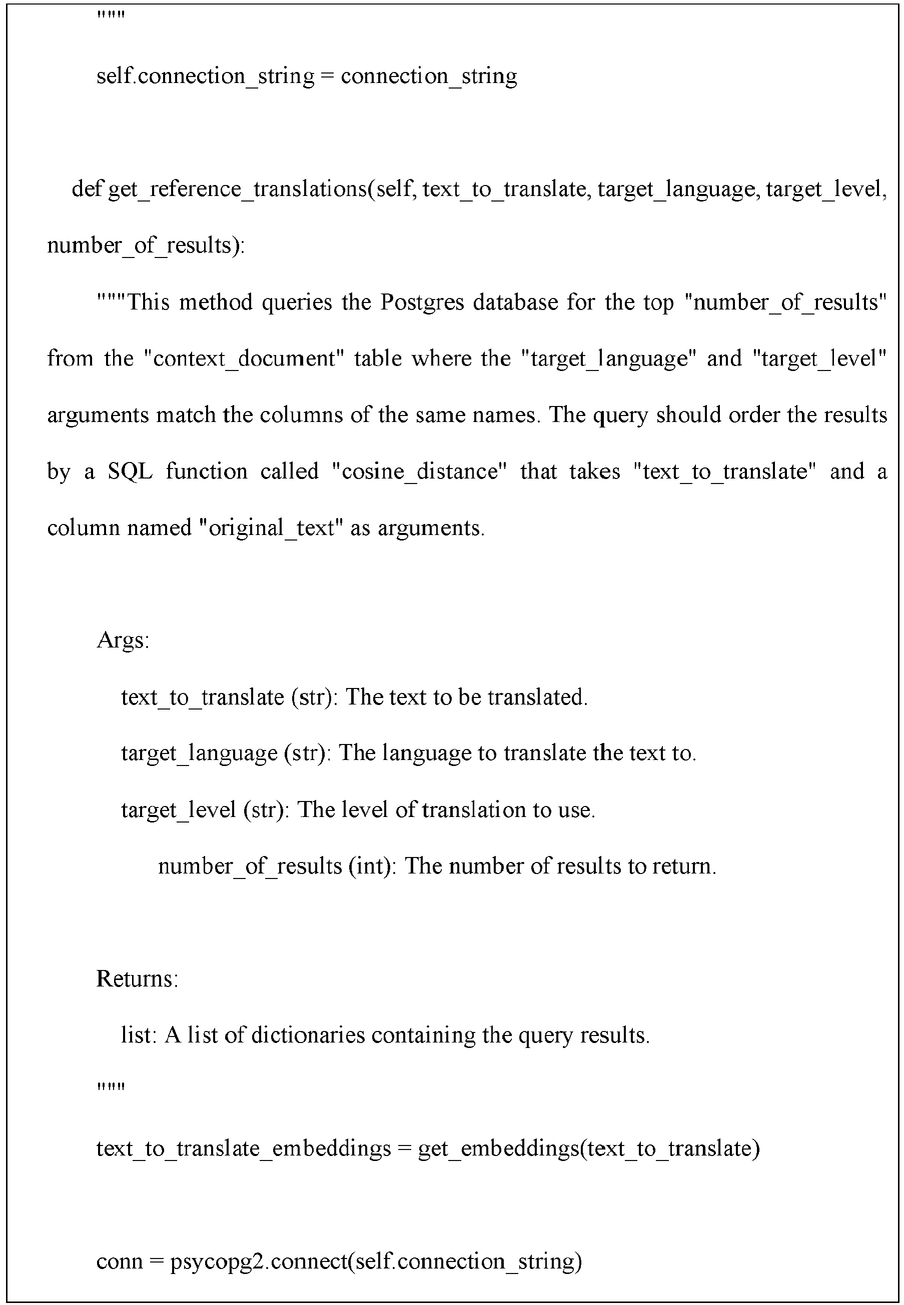

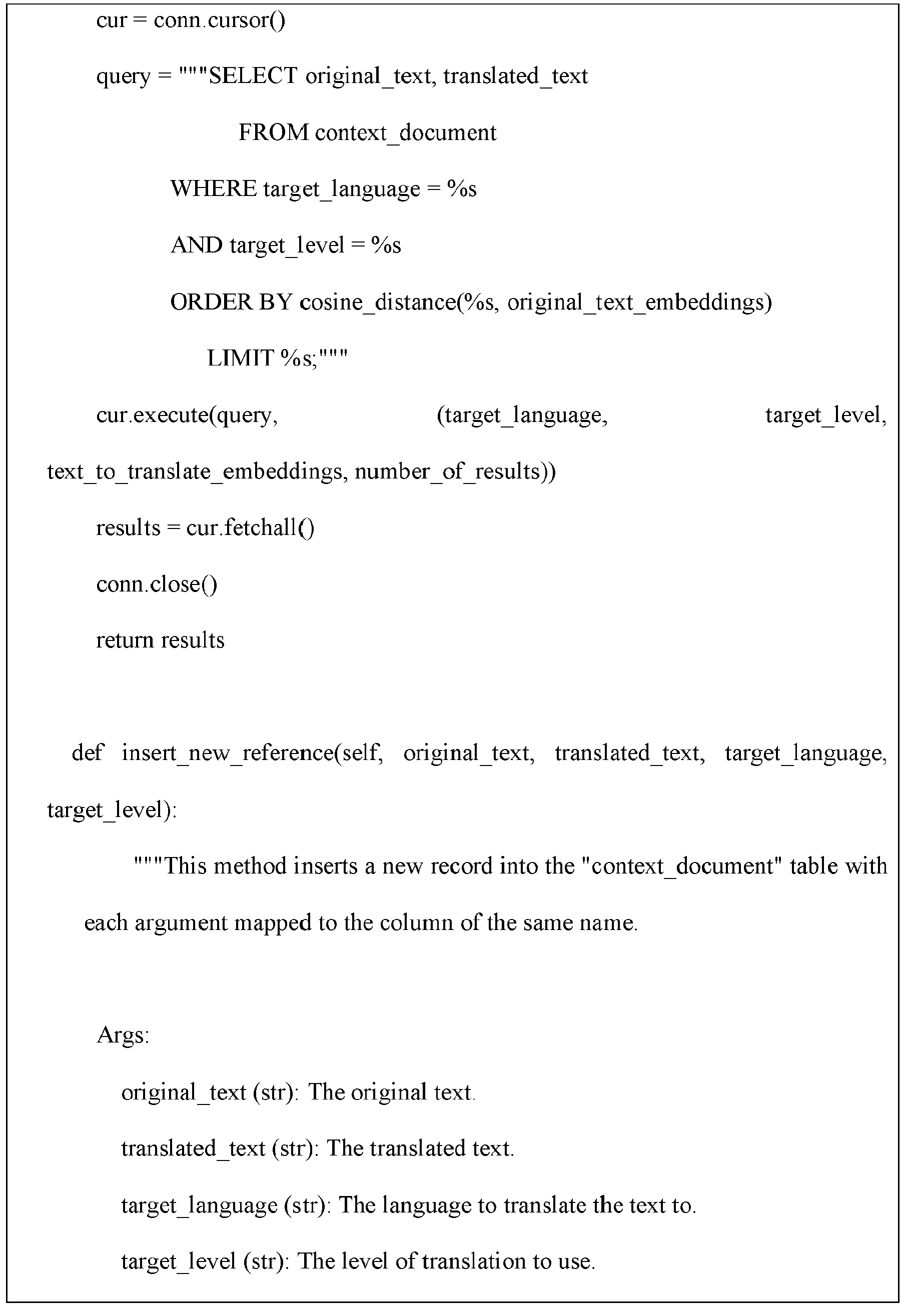

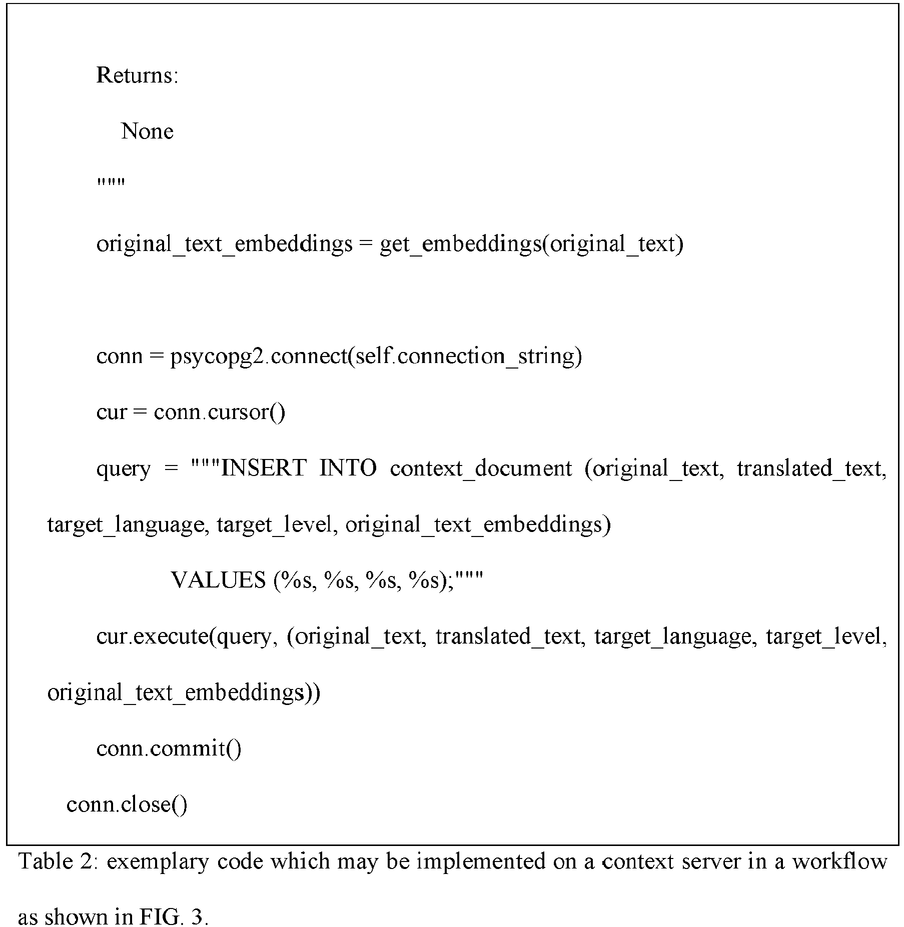

### V. General

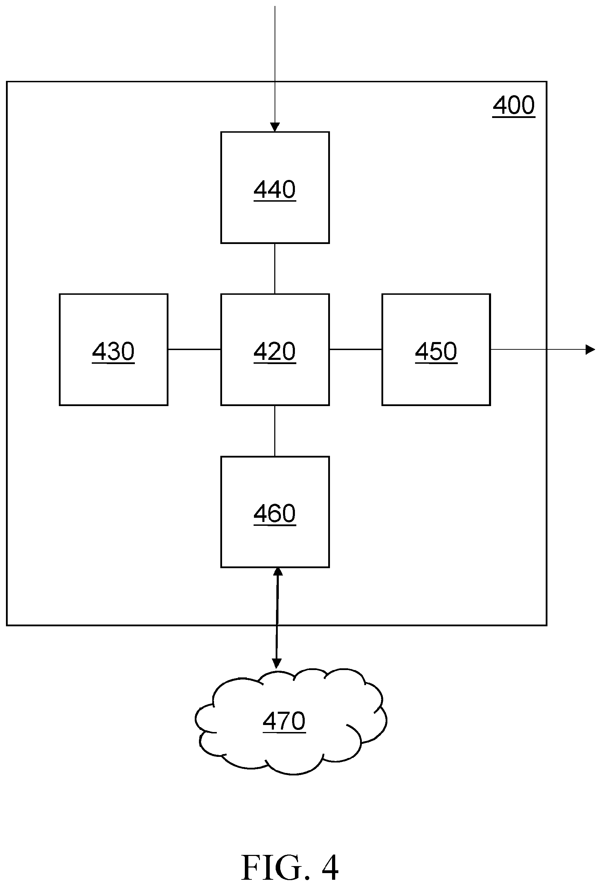

In some embodiments of the systems described herein, the computing/processing resources/devices that are applied generally take the form of a mobile, laptop, desktop, or server-type computer, as mentioned above and as will occur to those skilled in the art. The "computer" 400, as this example will generically be referred to with reference to FIG. 4, includes a processor 420 in communication with a memory 430, input interface(s) 440, output interface(s) 450, and network interface 460. Memory 430 stores a variety of data but is also encoded with programming instructions executable to perform the functions described herein. Power, ground, clock, additional communication connections, and other signals and circuitry (not shown) are used as appropriate for each context as will be understood and implemented by those skilled in the art.

The network interface 460 connects the computer 400 to a data network 470 for communication of data between the computer 400 and other devices attached to the network 470. Input interface(s) 440 manage communication between the processor 420 and one or more touch screens, sensors, pushbuttons, UARTs, IR and/or RF receivers or transceivers, decoders, or other devices, as well as traditional keyboard and mouse devices. Output interface(s) 450 may provide a video signal to a display (not shown), and may provide signals to one or more additional output devices such as LEDs, LCDs, or audio output devices, local multimedia devices, local notification devices, or a combination of these and other output devices and techniques as will occur to those skilled in the art.

The processor 420 in some embodiments is a microcontroller or general-purpose microprocessor that reads its program from the memory 430. The processor 420 may be comprised of one or more components configured as a single unit. When of a multicomponent form, the processor may have one or more components located locally and/or one or more components located remotely relative to the others, in any case operating using uniprocessor, symmetric multiprocessor, asymmetric multiprocessor, clustered, or other technique as will occur to those skilled in the art. One or more components of the processor may be of the electronic variety including digital circuitry, analog circuitry, or both. In some embodiments, the processor (or one or more components thereof) is of a conventional, integrated circuit microprocessor arrangement, such as one or more CORE i5, i7, or i9 processors from INTEL Corporation of 2200 Mission College Boulevard, Santa Clara, California 95052, USA, or BEEMA, EPYC, or RYZEN processors from Advanced Micro Devices, 2485 Augustine Drive, Santa Clara, California 95054, USA. In alternative embodiments, one or more reduced instruction set computer (RISC) processors, application-specific integrated circuits (ASICs), general-purpose microprocessors, programmable logic arrays, or other devices may be used alone or in combinations as will occur to those skilled in the art.

Likewise, the memory 430 in various embodiments includes one or more types such as solid-state electronic memory, magnetic memory, or optical memory, just to name a few. By way of non-limiting example, the memory 430 can include solid-state electronic Random Access Memory (RAM), Sequentially Accessible Memory (SAM) (such as the First-In, First-Out (FIFO) variety or the Last-In First-Out (LIFO) variety), Programmable Read-Only Memory (PROM), Electrically Programmable Read-Only Memory (EPROM), or Electrically Erasable Programmable Read-Only Memory (EEPROM); an optical disc memory (such as a recordable, rewritable, or read-only DVD or CD-ROM); a magnetically encoded hard drive, floppy disk, tape, or cartridge medium; a solid-state or hybrid drive; or a plurality and/or combination of these memory types. Also, the memory in various embodiments is volatile, nonvolatile, or a hybrid combination of volatile and nonvolatile varieties.

Computer programs implementing the methods described herein will commonly be stored and/or distributed either on a physical distribution medium such as DVD-ROM or via a network distribution medium such as an internet protocol or token ring network, using other media, or through some combination of such distribution media. From there, they will often be copied to a solid-state drive, hard disk, non-volatile memory, or a similar intermediate storage medium. When the programs are to be run, they are loaded either from their distribution medium or their intermediate storage medium into the execution memory of the computer, configuring the computer to act in accordance with the method described herein. All of these operations are well known to those skilled in the art of computer systems.

### VI. Interpretation

When an act is described herein as occurring "as a function of" or "based on" a particular thing, the system is configured so that the act is performed in different ways depending on one or more characteristics of the thing. When the act is described herein as occurring "solely as a function of" or "based exclusively on" a particular thing, the system is configured so that the act is performed in different ways depending only on one or more characteristics of the thing.

References herein to a "data structure" refer equally to collections of data in contiguous memory, various semantically related data elements separated in different memory locations or memory devices, references (of any degree of indirection) to any of the above, and any combination of the above.

References to a "set" should be understood as meaning a group of zero or more elements. "Superset" and "subset" should be understood as synonymous with "set," and use of "superset" or "subset" should be understood as being for purposes of readability, and not as implying a difference from a "set." Similarly, referring to a "set" as comprising a "subset" or as being comprised by a "superset" should not be understood as implying that the "set" necessarily comprises more elements than the "subset" or that it consists of fewer elements than the "superset."

Descriptors such as "first" and "second" should be understood as labels used for the purposes of identification, and should not be understood as implying or imposing any particular requirements on the items they are associated with. For example, describing two elements as, respectively, "first" and "second" should not be understood as implying an order, priority or precedence between those elements, or even that those elements are necessarily different from each other. Similarly, labels such as "a," "b," "c," or "i", "ii," "iii" should be understood as being included solely to facilitate referring to the items they identify, and should not be treated as implying an order or any other relationship between those items.

Except as set forth otherwise in the above explicit definitions, all words and phrases used herein should be understood as having their plan meaning as provided by a general purpose dictionary.

It should be understood that any of the examples described herein may include various other features in addition to or in lieu of those described above. By way of example only, any of the examples described herein may also include one or more of the various features disclosed in the prior application, which is incorporated by reference herein.

It should be understood that any one or more of the teachings, expressions, embodiments, examples, etc. described herein may be combined with any one or more of the other teachings, expressions, embodiments, examples, etc. that are described herein. The above-described teachings, expressions, embodiments, examples, etc. should, therefore, not be viewed in isolation relative to each other. Various suitable ways in which the teachings herein may be combined will be readily apparent to those of ordinary skill in the art in view of the teachings herein. Such modifications and variations are intended to be included within the scope of protection provided by this document.

It should be appreciated that any patent, publication, or other disclosure material, in whole or in part, that is said to be incorporated by reference herein is incorporated herein only to the extent that the incorporated material does not conflict with existing definitions, statements, or other disclosure material set forth in this disclosure. As such, and to the extent necessary, the disclosure as explicitly set forth herein supersedes any conflicting material incorporated herein by reference. Any material, or portion thereof, that is said to be incorporated by reference herein, but which conflicts with existing definitions, statements, or other disclosure material set forth herein will only be incorporated to the extent that no conflict arises between that incorporated material and the existing disclosure material.

Having shown and described various versions of the inventors' technology, further adaptations of the methods and systems described herein may be accomplished by appropriate modifications by one of ordinary skill in the art without departing from the scope of the present invention. Several of such potential modifications have been mentioned, and others will be apparent to those skilled in the art. For instance, the examples, versions, geometries, materials, dimensions, ratios, steps, and the like discussed above are illustrative and are not required. Accordingly, the scope of protection provided by this document, or by other related documents should be considered in terms of the documents' claims and should not be limited to the details of structure and operation shown and described in the specification and drawings.

### VII. Illustrative Examples

As a further illustration of potential implementations and applications of the disclosed technology, the following examples are provided of non-exhaustive ways in which the teachings herein may be combined or applied. It should be understood that the following examples are not intended to restrict the coverage of any claims that may be presented at any time in this application or in subsequent filings of this application. No disclaimer is intended. The following examples are being provided for nothing more than merely illustrative purposes. It is contemplated that the various teachings herein may be arranged and applied in numerous other ways. It is also contemplated that some variations may omit certain features referred to in the below examples. Therefore, none of the aspects or features referred to below should be deemed critical unless otherwise explicitly indicated as such at a later date by the inventors or by a successor in interest to the inventors. If any claims are presented in this application or in subsequent filings related to this application that include additional features beyond those referred to below, those additional features shall not be presumed to have been added for any reason relating to patentability.

### Example 1

A method comprising: a) receiving an artificial intelligence request, wherein the artificial intelligence request comprises a payload; b) retrieving, from a context database, a set of exemplars corresponding to the artificial intelligence request; c) generating a first artificial intelligence prompt, wherein the first artificial intelligence prompt comprises: i) the set of exemplars corresponding to the artificial intelligence request; and ii) the payload from the artificial intelligence request; and d) obtaining a first artificial intelligence output by performing acts comprising providing the first artificial intelligence prompt to a first trained machine learning model.

### Example 2

The method of example 1, wherein the method comprises: a) generating a second artificial intelligence prompt, wherein the second artificial intelligence prompt comprises the first artificial intelligence output and the payload from the artificial intelligence request; b) obtaining a second artificial intelligence output by performing acts comprising providing the second artificial intelligence prompt to a second trained model; and c) determining a final artificial intelligence output based on the first artificial intelligence output and the second artificial intelligence output.

### Example 3

The method of any of examples 1-2, wherein: a) the payload from the artificial intelligence request comprises a document to be translated from a first language into a second language; b) each exemplar from the set of exemplars corresponding to the artificial intelligence request comprises: i) text in the first language; and ii) corresponding text in the second language; and c) the first artificial intelligence output comprises text in the second language corresponding to the payload from the artificial intelligence request.

### Example 4

The method of example 3, wherein the context database comprises a superset of exemplars, wherein each exemplar from the superset of exemplars comprises text in the first language and corresponding text in the second language.

### Example 5

The method of example 4, wherein the method comprises: a) generating a first set of embeddings, wherein the first set of embeddings comprises embeddings for words included in the payload of the artificial intelligence request; b)selecting the set of exemplars corresponding to the artificial intelligence request from the superset of exemplars based on, for each exemplar from the set of exemplars corresponding to the artificial intelligence request, a distance between: i) the first set of embeddings; and ii) a set of embeddings which comprises embeddings for words included in the text in the first language from that exemplar.

### Example 6

The method of any of examples 4-5, wherein: a) the artificial intelligence request comprises the payload and a value for a target parameter; b) each exemplar from the superset of exemplars comprised by the context database has a corresponding value for the target parameter; and c) the method comprises selecting the set of exemplars corresponding to the artificial intelligence request from the superset of exemplars based on, for each exemplar from the set of exemplars corresponding to the artificial intelligence request, identifying the value for the target parameter corresponding to that exemplar as matching the value for the target parameter comprised by the artificial intelligence request.

### Example 7

The method of example 6, wherein: a) the target parameter is reading level; b) the first artificial intelligence output has a reading level matching the value of the target parameter comprised by the artificial intelligence request; and c) the payload comprised by the artificial intelligence request has a reading level which does not match the value of the target parameter comprised by the artificial intelligence request.

### Example 8

The method of example 7, wherein the first language and the second language are the same language.

### Example 9

The method of any of examples 2-8, wherein: a) the second artificial intelligence output comprises: i) text in the second language corresponding to the payload from the artificial intelligence request; ii) a first confidence, wherein the first confidence is confidence in the text in the second language comprised by the first artificial intelligence output as accurately translating the payload from the artificial intelligence request from the first language to the second language; and iii) a second confidence, wherein the second confidence is confidence in the text in the second language comprised by the second artificial intelligence output as accurately translating the payload from the artificial intelligence request from the first language to the second language; and b) determining the final artificial intelligence output based on the first artificial intelligence output and the second artificial intelligence output comprises determining text for the final artificial intelligence output selected from: i) the text in the second language comprised by the first artificial intelligence output; and ii) the text in the second language comprised by the second artificial intelligence output based on the first confidence and the second confidence.

### Example 10

The method of any of examples 2-9, wherein the final artificial intelligence output comprises: a) text in the second language corresponding to the payload from the artificial intelligence request; and b) a confidence in the text comprised by the final artificial intelligence output as accurately translating the payload from the artificial intelligence request from the first language to the second language.

### Example 11

The method of any of examples 1-10, wherein the method comprises: a) receiving an approved translation, wherein the approved translation comprises text in the second language corresponding to the payload from the artificial intelligence request; and b) updating the context database by adding a new exemplar comprising: i) the payload from the artificial intelligence request; and ii) the approved translation.

### Example 12

A non-transitory computer readable medium having stored thereon instructions for performing the method of any of examples 1-11.

### Example 13

A system comprising a computer comprising a non-transitory computer readable medium storing instructions operable to, when executed, configure the computer to perform the method of any of examples 1-11.

Other examples, implementations, embodiments and applications of the disclosed technology are also possible, and so the examples described above should be treated as illustrative only, and should not be understood as implying limitations on the protection provided by this document or by any related document.

## Claims

1. A method comprising:
a) receiving an artificial intelligence request, wherein the artificial intelligence request comprises a payload;
b) retrieving, from a context database, a set of exemplars corresponding to the artificial intelligence request;
c) generating a first artificial intelligence prompt, wherein the first artificial intelligence prompt comprises:
i) the set of exemplars corresponding to the artificial intelligence request; and
ii) the payload from the artificial intelligence request;
and
d) obtaining a first artificial intelligence output by performing acts comprising providing the first artificial intelligence prompt to a first trained machine learning model.

2. The method of claim 1, wherein the method comprises:
a) generating a second artificial intelligence prompt, wherein the second artificial intelligence prompt comprises the first artificial intelligence output and the payload from the artificial intelligence request;
b) obtaining a second artificial intelligence output by performing acts comprising providing the second artificial intelligence prompt to a second trained model; and
c) determining a final artificial intelligence output based on the first artificial intelligence output and the second artificial intelligence output.

3. The method of any of claims 1-2, wherein:
a) the payload from the artificial intelligence request comprises a document to be translated from a first language into a second language;
b) each exemplar from the set of exemplars corresponding to the artificial intelligence request comprises:
i) text in the first language; and
ii) corresponding text in the second language;
and
c) the first artificial intelligence output comprises text in the second language corresponding to the payload from the artificial intelligence request.

4. The method of claim 3, wherein the context database comprises a superset of exemplars, wherein each exemplar from the superset of exemplars comprises text in the first language and corresponding text in the second language.

5. The method of claim 4, wherein the method comprises:
a) generating a first set of embeddings, wherein the first set of embeddings comprises embeddings for words included in the payload of the artificial intelligence request;
b) selecting the set of exemplars corresponding to the artificial intelligence request from the superset of exemplars based on, for each exemplar from the set of exemplars corresponding to the artificial intelligence request, a distance between:
i) the first set of embeddings; and
ii) a set of embeddings which comprises embeddings for words included in the text in the first language from that exemplar.

6. The method of any of claims 4-5, wherein:
a) the artificial intelligence request comprises the payload and a value for a target parameter;
b) each exemplar from the superset of exemplars comprised by the context database has a corresponding value for the target parameter; and
c) the method comprises selecting the set of exemplars corresponding to the artificial intelligence request from the superset of exemplars based on, for each exemplar from the set of exemplars corresponding to the artificial intelligence request, identifying the value for the target parameter corresponding to that exemplar as matching the value for the target parameter comprised by the artificial intelligence request.

7. The method of claim 6, wherein:
a) the target parameter is reading level;
b) the first artificial intelligence output has a reading level matching the value of the target parameter comprised by the artificial intelligence request; and
c) the payload comprised by the artificial intelligence request has a reading level which does not match the value of the target parameter comprised by the artificial intelligence request.

8. The method of claim 7, wherein the first language and the second language are the same language.

9. The method of any of claims 2-8, wherein:
a) the second artificial intelligence output comprises:
i) text in the second language corresponding to the payload from the artificial intelligence request;
ii) a first confidence, wherein the first confidence is confidence in the text in the second language comprised by the first artificial intelligence output as accurately translating the payload from the artificial intelligence request from the first language to the second language; and
iii) a second confidence, wherein the second confidence is confidence in the text in the second language comprised by the second artificial intelligence output as accurately translating the payload from the artificial intelligence request from the first language to the second language;
and
b) determining the final artificial intelligence output based on the first artificial intelligence output and the second artificial intelligence output comprises determining text for the final artificial intelligence output selected from:
i) the text in the second language comprised by the first artificial intelligence output; and
ii) the text in the second language comprised by the second artificial intelligence output
based on the first confidence and the second confidence.

10. The method of any of claims 2-9, wherein the final artificial intelligence output comprises:
a) text in the second language corresponding to the payload from the artificial intelligence request; and
b) a confidence in the text comprised by the final artificial intelligence output as accurately translating the payload from the artificial intelligence request from the first language to the second language.

11. The method of any of claims 1-10, wherein the method comprises:
a) receiving an approved translation, wherein the approved translation comprises text in the second language corresponding to the payload from the artificial intelligence request; and
b) updating the context database by adding a new exemplar comprising:
i) the payload from the artificial intelligence request; and
ii) the approved translation.

12. A non-transitory computer readable medium having stored thereon instructions for performing the method of any of claims 1-11.

13. A system comprising a computer comprising a non-transitory computer readable medium storing instructions operable to, when executed, configure the computer to perform the method of any of claims 1-11.
